# EUROPEAN PATENT APPLICATION

(11) **EP 2 725 755 A1**
(43) Date of publication of application: **30.04.2014**
(21) Application number: 12802757.0
(22) Date of filing: 29.03.2012
(51) Int. Cl.: H04L 29/02

(54) **DATA CARD AND ACTIVATION METHOD THEREOF**

(30) Priority: 21.06.2011 CN 201110168170
(71) Applicant: ZTE Corporation, Shenzhen, Guangdong 518057 (CN)
(72) Inventor: WEI, Zhigang, Shenzhen Guangdong 518057 (CN)
(74) Representative: Bongiovanni, Simone
(86) International application number: PCT/CN2012/073254
(87) International publication number: WO 2012/174917

(57) **Abstract**

The present invention relates to an activation method for a data card and a data card. The method comprises: after a data card is powered on, the data card detects an activation state of the data card; when the activation state is network card activation mode, the data card completes a data card activation process via an AT command generated in the data card; the data card establishes a connection to a terminal; and the data card establishes a connection with a network via dialing up on the terminal. The data card of the present invention has two activation modes: a network card activation mode and a U-disc activation mode; in the U-disc activation mode, only a U-disc related module is activated; and in the network card activation mode, the data card can be configured to access the internet via the interaction with an AT command in the data card without installing GUI software, and various operation systems can be compatible. When the data card is activated in the network card activation mode, an Ethernet card is enumerated directly without a switching process from the CDROM to the modem, thereby improving the activation speed of the data card. The Ethernet card device and the U-disc cannot function at the same time, so as to ensure that the limited bandwidth of a USB is completely used for data service, thereby effectively improving network speed.

## Description

### Field

The present invention relates to the communication field, and in particular to an activation method for a data card without GUI (Graphical User Interface) software and a data card without GUI software.

### Background

Currently, with the rapid development of the 3G (3rd-generation) mobile communication network technologies, more and more users select to use wireless data cards to surf a network. The advent of the data card enables people to enjoy the life enjoyment brought by the bandwidth data service anywhere and anytime without the restriction of space and territory.

In view of the good market prospect of data cards, various operators push out their own data card products, and these products usually have the following features:
1. self-starting function: when being inserted into a computer for the first time, a CDROM (Compact Disc Read-Only Memory) appears for the user to install a driver and corresponding software;
2. a dedicated GUI software is required: the GUI realizes various functions by sending an AT command to the data card, such as startup, network searching, dial-up access and so on;
3. Modem interface mode is used, an IP data packet is born via PPP; and
4. with a TF (TransFlash) card reader function, the user can use the data card as a U-disc.

Although integrating the above-mentioned multiple functions into one data card meets the market demand, the existing data card has the following defects:
1. the self-starting function increases the activation time of the data card, and there is a configuration switching process from CDROM to Modem each time the data card is inserted;
2. the startup and network surfing function of the data card have to be completed by employing dedicated GUI software, while the manufacturers of the data card usually provide GUI software of Windows platform, and therefore, it is difficult for the user to use the data card normally in a terminal without a Windows system, for example, for some emergent mobile terminal devices, such as IPAD of Apple Inc., or devices of Andriod system, it is very difficult to be compatible with them;
3. in the Modem interface mode, the IP (Internet Protocol, protocol for the interconnection among networks) data is born by PPP (Point to Point Protocol) packets, the efficiency of which is very low; and
4. the function and speed of the U-disc integrated in the data card cannot be compared to commercial U-discs, and in addition, the use of the U-disc will also affect the network surfing speed.

### Summary

The present invention provides an activation method for a data card and a data card, which enable to improve the compatibility of the data card with various operating systems and can improve the activation speed and network surfing speed of the data card.

The present invention proposes an activation method for a data card, comprising:
after being powered on, the data card detecting an activation state of the data card;
when the activation state is a network card activation mode, completing a startup process of the data card via an AT command generated in the data card; and
the data card establishing a connection with a terminal and establishing a connection with a network via dialing up on the terminal.

Preferably, it further comprises:
when the activation state is a U-disc activation mode, the data card activating a U-disc function module and establishing a data transmission channel to the terminal.

Preferably, the step of completing the startup process of the data card via the AT command comprises:
the data card generating the AT command;
parsing the AT command and invoking a corresponding startup function module on the data card according to the AT command.

Preferably, the step of establishing the connection with the terminal comprises:
sending to a terminal a network card connection state command via an USB ECM interface; and
after the terminal modifies a connection state of the data card according to the network card connection state command, the data card allocating a local area network IP address to the terminal and establishing the connection with the terminal.

Preferably, the step of establishing the connection to the network via dialing up on the terminal comprises:
the data card performing PDP activation via dialing up on the terminal;
after the activation succeeds, opening an acquired data transmission channel and obtaining a wide area network IP address allocated by the network; and
transmitting an IP data packet born by Ethernet frames between the terminal and the network via the local area network IP address and the wide area network IP address.

The present invention also proposes a data card, comprising:
a detection module, configured to detect an activation state of the data card after the data card is powered on;
a network card activation module, configured to, when the activation state is a network card activation mode, complete a startup process of the data card via an AT command generated in the data card; and
a connection establishment module, configured to establish a connection with a terminal and establish a connection with a network via dialing up on the terminal.

Preferably, it further comprises:
a U-disc activation module, configured to, when the activation state is a U-disc activation mode, activate a U-disc function module and establish a data transmission channel to the terminal.

Preferably, the network card activation module comprises:
an AT command generation unit, configured to generate an AT command; and
an AT command parsing execution unit, configured to parse the AT command and invoke a corresponding startup function module on the data card according to the AT command.

Preferably, the connection establishment module comprises:
a network card state reporting unit, configured to send a network card connection state command to the terminal via a USB ECM interface; and
a gateway unit comprising a gateway control sub-unit configured to, after the terminal modifies a connection state of the data card according to the network card connection state command, allocate a local area network IP address to the terminal and establish the connection with the terminal.

Preferably, the gateway unit also comprises a data transmission sub-unit, wherein
the gateway control sub-unit is further configured to perform PDP activation via dialing up on the terminal and open an acquired data transmission channel, and obtain a wide area network IP address allocated by the network after the activation succeeds; and the data transmission sub-unit is configured to transmit an IP data packet born by Ethernet frames between the terminal and the network via the local area network IP address and the wide area network IP address.

In the activation method for a data card and the data card proposed in the present invention, by way of setting two activation modes of the data card, i.e., network card activation mode and U-disc activation mode, in the U-disc activation mode, only a U-disc related module is activated, and in the network card activation mode, interaction is performed via an AT command in the data card, the data card can be used to surf a network without installing GUI software, and various operating systems can be compatible; moreover, when the data card is activated in the network card activation mode, an Ethernet card is enumerated directly, the switching process of the conventional data card from CDROM to Modem will not appear, thereby improving the activation speed of the data card. In addition, the Ethernet card device and the U-disc device will not function at the same time, which can ensure that the limited bandwidth of a USB is completely used for data service, thereby being able to effectively improve network surfing speed.

### Brief Description of the Drawings

Fig. 1 is a schematic flowchart of an activation method for a data card according to an embodiment of the present invention;
Fig. 2 is a schematic flowchart of completing a startup process of a data card via an AT command of an activation method for a data card according to an embodiment of the present invention;
Fig. 3 is a schematic flowchart of establishing a connection with a terminal of an activation method for a data card according to an embodiment of the present invention;
Fig. 4 is a schematic flowchart of establishing a connection with a network via dialing up on a terminal of an activation method for a data card according to an embodiment of the present invention;
Fig. 5 is a structural schematic diagram of a data card according to an embodiment of the present invention;
Fig. 6 is a structural schematic diagram of a network card activation module of the data card according to an embodiment of the present invention; and
Fig. 7 is a structural schematic diagram of a connection establishment module of the data card according to an embodiment of in the present invention.

To make the technical solutions of the present invention more clear, the present invention is described hereinafter with reference to the drawings.

### Detailed Description of the Embodiments

The solution in the embodiments of the present invention is mainly as follows: by way of setting two activation modes of a data card, i.e., network card activation mode and U-disc activation mode, in the U-disc activation mode, only a U-disc related module is activated, and in the network card activation mode, interaction is performed via an AT command in the data card, the data card can be used to surf a network without installing GUI software, and various operating systems can be compatible; moreover, when the data card is activated in the network card activation mode, an Ethernet card is enumerated directly, the switching process of the conventional data card from CDROM to Modem will not appear, thereby improving the activation speed of the data card. In addition, the Ethernet card device and the U-disc device will not function at the same time, which can ensure that the limited bandwidth of a USB is completely used for data service, thereby being able to effectively improve the network surfing speed.

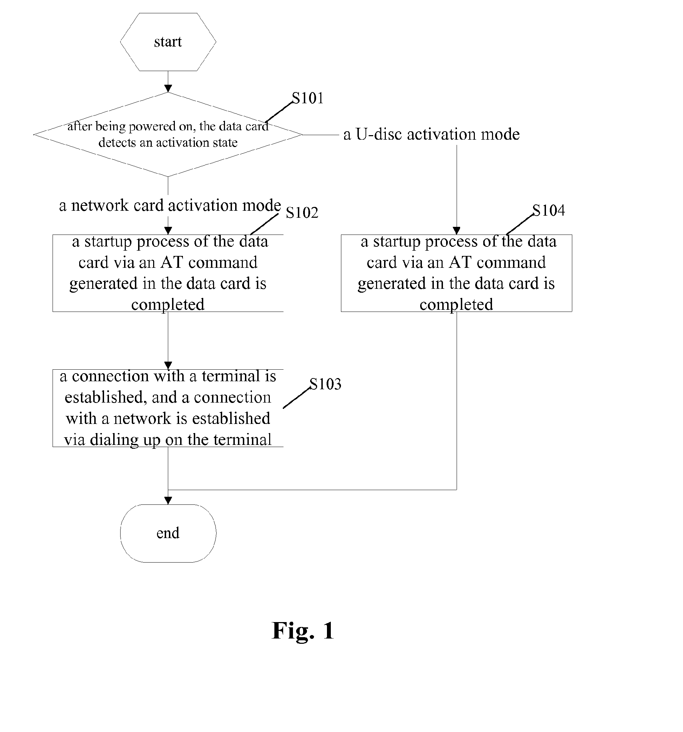

As shown in Fig. 1, an activation method for a data card is proposed in an embodiment of the present invention, comprising the following steps.

Step S101, after being powered on, the data card detects an activation state. If the activation state is a network card activation mode, then perform step 102, and if the activation state is a U-disc activation mode, then perform step 104.

In this embodiment, the data card has two functions, i.e., U-disc and network card, and there are two corresponding activation modes; the shell of the data card is provided with a toggle switch, and the user selects the activation mode of the data card through the toggle switch.

Before the data card is inserted into a terminal, such as a PC, the user first selects the position of the toggle switch according to his/her own demand and then selects the activation mode.

After the data card is inserted into the terminal via a USB (Universal Serial BUS) interface, the terminal supplies power to the data card. The data card starts to run activation codes, and in the activation codes, the data card first checks the position state of the toggle switch which is set by the user. The position state is represented in the form of level, wherein a high level represents to activate in the network card activation mode, and a low level represents to activate in the U-disc activation mode. The state signal of the toggle switch is connected to a GPIO (General Purpose Input Output) pin of the data card. When being activated, the data card first reads the state value of the GPIO pin, if the state value is 0, i.e., the state value is the low level, then it is activated in the U-disc activation mode; and if the state value is 1, i.e., the state value is the high level, then it is activated in the network card activation mode.

Step S102, when the activation state is the network card activation mode, a startup process of the data card via an AT command generated in the data card is completed.

Step S103, a connection with a terminal is established, and a connection with a network is established via dialing up on the terminal.

When the data card is activated in the network card activation mode, the data card is connected to the terminal via an Ethernet interface, and a virtual network card device is generated in the device manager of the terminal. This virtual network card device satisfies Ethernet 802.3 protocol, and the IP data packets generated by all the application programs are born by Ethernet frames. As compared to the conventional PPP mode, the compression and parsing process of the data packet is removed when transmitting IP data packets with Ethernet frames, which can effectively improve the network surfing rate. At the same time, this virtual network card device satisfies USB 2.0 protocol specifications, and various operating systems can support this virtual network card device.

Taking Windows xp operating system as an example, after the data card is activated, the information about this virtual network card device can be queried in the device manager, and in an initial state, the connection state of the virtual network card shows "unconnected". The virtual network card satisfies USB ECM (Ethernet control model) specification and is compatible with USB2.0 protocol, and it has very good compatibility for various operating systems.

It needs to be noted that the state of the virtual network card comprises connection state and speed state. In the initial state, the connection state of the virtual network card shows "unconnected", and after the data card actively modifies the connection state, it shows "connected". After the data card establishes the connection to the network, it will display the speed state, such as speed 100 Mbps.

When the data card is activated in the network card activation mode, it first invokes the network card activation module to perform self-startup without sending the AT (Attention) command via GUI.

This network card activation module is integrated with an AT command generation unit and an AT command parsing execution unit, wherein the AT command generation unit produces all the AT commands that are required when the data card is powered on, such as radio frequency enable, SIM (Subscriber Identification Module) card initialization, network searching, cell residence, and so on, and sends these AT commands to the AT command parsing execution unit successively. Another advantage of integrating the AT command generation unit in the data card is that the difference among the AT command sets of various operators are shielded. Since some terminal device manufacturers such as MID (Mobile Internet Devices) device manufacturers usually integrate a plurality of groups of AT command sets in the terminal for supporting the products of a plurality of operators simultaneously, and once the operators update the AT commands, usually there will be a problem occurring in the AT command interaction of the MID terminal and the data card, resulting in that both of them cannot be compatible.

The function of the AT command generation unit is equivalent to the GUI software in the traditional data card and can complete the interaction of AT commands with the AT command parsing execution unit, so as to complete the startup process.

The AT command parsing execution unit is responsible for processing the AT commands from the AT command generation unit and converting same to particular operation commands to control the software and hardware of the data card to work cooperatively.

In particular, after receiving the AT command, the AT command parsing execution unit invokes different software and hardware modules to perform corresponding processing, for example, if it receives an AT + CFUN = 1 command, a radio-frequency switch will be switched on. After the processing of the AT command is completed, the AT command parsing execution unit returns the processing result to the AT command generation unit, so as to generate a next AT command.

Therefore, the data card can complete the startup function via the network card activation module without sending an AT command via GUI.

Before surfing a network, the virtual network card device first dials up. For the operating system, the virtual network card is equivalent to a real physical network card, and dialup can be completed by way of receiving a corresponding command input by the user and creating a network connection on the operating system. Since a standard network card interface is employed, the dialup function of the data card can be completed without any additional GUI software.

After the startup process of the data card is completed, the data card can perform a dialup operation. At this moment, the data card notifies a terminal driver to modify the connection state of the virtual data card as "connected" by way of sending a network card connection state command to the terminal via the USB ECM interface. Taking a Windows system as an example, at this moment, the host machine will initiate DHCP (Dynamic Host Configuration Protocol) negotiation, and after the DHCP negotiation is completed, a connected virtual network card device appears in the system tray of the terminal and the local area network IP address allocated by the DHCP host machine is obtained.

After the virtual network card device is in a connected state, the data card performs a dialup operation by way of receiving a dialup command of the user. The dialup method is similar to the existing ADSL (Asymmetric Digital Subscriber Line), and dialup can be performed by way of newly establishing a bandwidth connection. In particular, dialup is performed through PPPOE (Point-to-Point Protocol Over Ethernet) protocol. During dialup, the data card performs PDP (packet data protocol) activation, and after the activation succeeds, the data card opens the data transmission channel and obtains the wide area network IP address allocated by the network.

After the dialup connection is completed, the data card can receive a corresponding command input by the user and surf a network via the virtual network card.

In addition, when the data card is activated in the network card activation mode, an Ethernet card will be enumerated directly, and the switching process of the traditional data card from CDROM to Modem will not appear, thereby improving the activation speed of the data card. In addition, the Ethernet card device and the U-disc device will not function at the same time, which can ensure that the limited bandwidth of a USB is completely used for data service, thereby being able to effectively improve the network surfing speed.

Step S104, when the activation state is a U-disc activation mode, the data card activates a U-disc function module and establishes a data transmission channel to the terminal,

When the data card is activated in the U-disc activation mode, a CDROM device and a removable disk device are generated in the device manager of the terminal. The CDROM contains the driver software provided by the manufacture; and the removable disk device is equivalent to a TF card reader for providing the function of U-disc storage.

In particular, when the data card is activated in the U-disc mode, during the initialization process thereof, only software and hardware modules related to the U-disc are enabled and operations such as network searching, cell residence, etc., will not be performed, so as to improve the activation speed, reduce power consumption and improve the transmission performance. In the U-disc activation mode, various logic devices may be enumerated, taking CDROM and TF card reader as an example, it is only required to enable an NAND FLASH module and an SD (Secure Digital Card) module.

The simplification of the above-mentioned initialization process improves the activation speed of the data card; disenabling hardware modules not related to the U-disc, such as radio-frequency module, may reduce the power consumption of the whole machine effectively; and disenabling software modules not related to the U-disc may ensures that the U-disc is not interfered during data storage.

After the activation in the U-disc activation mode succeeds, the data card can receive a corresponding command input by the user to operate the CDROM and TF card reader. Since at this moment, there is no network surfing data occupying the bandwidth over the USB interface, the speed of the U-disc can reach the level of the existing U-disc.

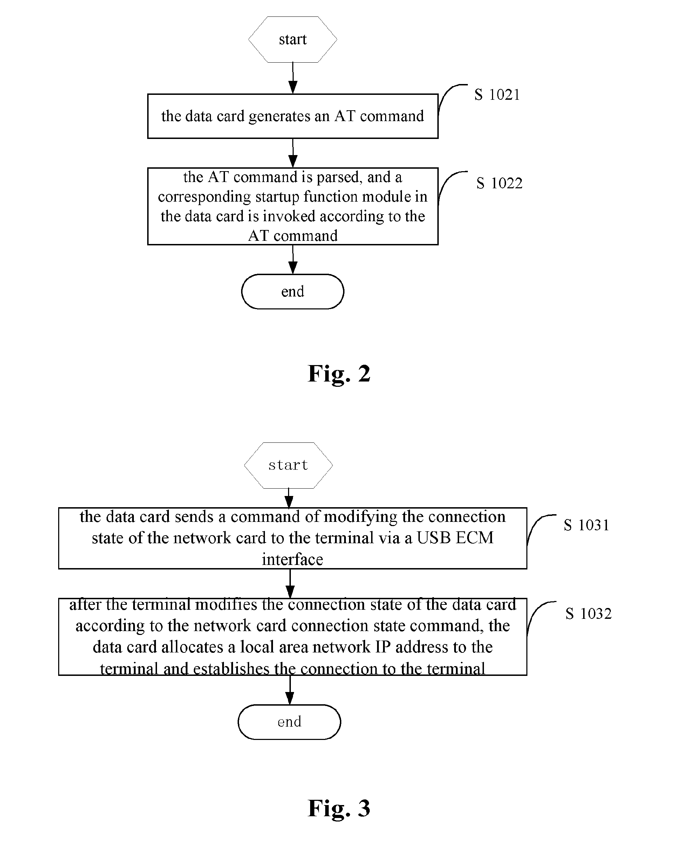

As shown in Fig. 2, the step of completing the startup process of the data card via the AT command in the above-mentioned step S102 comprises:
step S 1021, the data card generates an AT command;
step S 1022, the AT command is parsed, and a corresponding startup function module in the data card is invoked according to the AT command.

As shown in Fig. 3, the step of establishing the connection to the terminal in the above-mentioned step S103 comprises:
step S1031, the data card sends a network card connection state command to the terminal via a USB ECM interface; and
step S1032, after the terminal modifies the connection state of the data card according to the network card connection state command, the data card allocates a local area network IP address to the terminal and establishes the connection to the terminal.

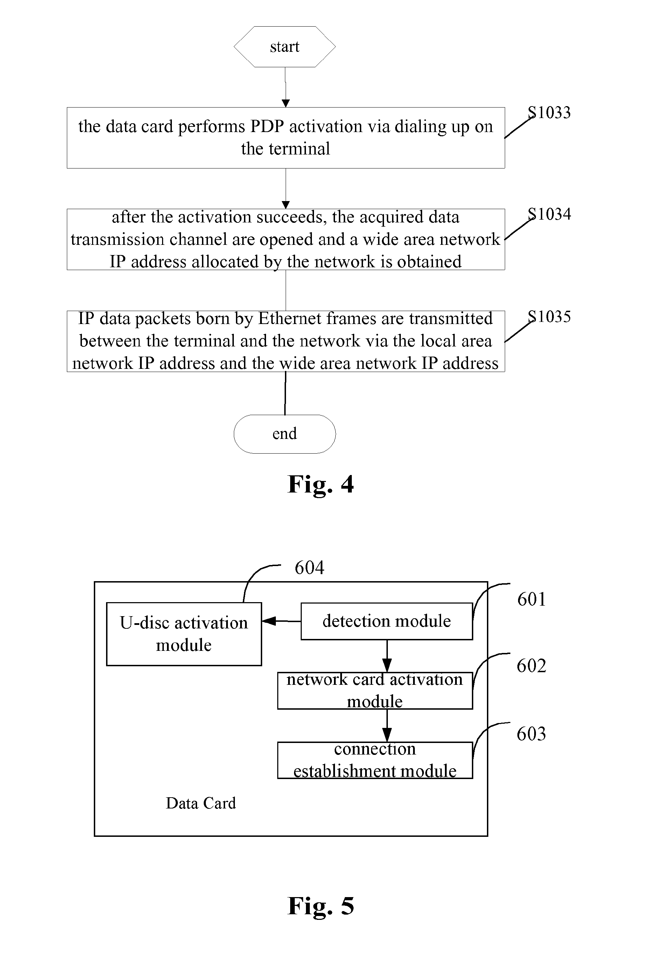

As shown in Fig. 4, the step of establishing the connection to the network in the above-mentioned step S103 comprises:
step S1033, the data card performs PDP activation via dialing up on the terminal;
step S1034, after the activation succeeds, the acquired data transmission channel are opened and a wide area network IP address allocated by the network is obtained; and
step S1035, IP data packets born by Ethernet frames are transmitted between the terminal and the network via the local area network IP address and the wide area network IP address.

After the data card establishes the connection to the terminal and the network, the terminal may perform data transmission with the network via the data card.

The data card and the terminal such as a PC employ a virtual Ethernet card connection mode. The terminal is equivalent to a client, and the data card is equivalent to a gateway device.

For simulating the gateway function, a virtual gateway module is integrated in the data card, and a 802.3 module, an ARP (Address Resolution Protocol) module, a DHCP module and a PPPOE module are integrated in the virtual gateway module, wherein
the 802.3 module is configured to transceive an Ethernet frame format data packet from the USB interface and convert same to an IP data packet to interact with an upper-layer module;
the ARP module is configured by the client to query a MAC (Medium/Media Access Control) address corresponding to the IP address;
the DHCP module is configured to allocate an IP address to the client, wherein the IP address is the local area network IP, for example, the gateway IP is 192.168.0.1, and the IP address of the client can be allocated with 192.168.0.2; and
the PPPOE module is configured to process the dial-up access function of the user, and during dialup, the PPPOE module will invoke the PDP module to complete the activation of the PDP data and obtain an IP address allocated by the network side, which IP address is the wide area network IP.

The data packet generated by the terminal can be sent to an external network merely after passing through the gateway device, which is referred to as data uplink here; vice versa, the data of the external network can be sent to the terminal merely after passing through the gateway device, which is referred to download here. Taking uplink data as an example, the procedure thereof is as follows:
1. during the networking surfing process of the user, a large amount of uplink data will be generated, for example, when sending an EMAIL, an uplink data packet will be generated;
2. the uplink data packet belongs to application layer data and is encapsulated as an IP data packet after passing through the TCP/IP (Transmission Control Protocol/Internet Protocol) protocol stack. In the IP data packet, the source address is "virtual gateway module", that is the wide area network IP allocated to the client during DHCP process, such as 192.168.0.2. The destination address is the wide area network actual IP address.
3. After the IP data is encapsulated, it is sent to the virtual network card driver, and the virtual network card driver is responsible for packaging the IP data into an Ethernet frame, which satisfies 802.3 Ethernet protocol specifications. Likewise, the source MAC address in the Ethernet frame header is designated by the virtual network card driver device, and the destination MAC address is the gateway MAC address, which is acquired through ARP protocol in advance.
4. After the Ethernet frame is formed, the virtual network card driver sends the formed Ethernet frame to the data card via the USB port, and the transmission format of the data over the USB cable satisfies USB ECM specification.
5. After receiving the Ethernet frame, the virtual gateway module of the data card extracts the IP data packet. Since the source address of the IP data packet is the local area network IP address of the client, that is, 192.168.0.2, it is required to replace the local area network IP address with the wide area network IP address allocated by the network side during dialup before sending the IP data packet to the real network. This replacement process embodies the routing function of the virtual gateway device.
6. The processed uplink data is sent to the network side via the radio-frequency antenna of the data card, and the uplink process of the data is completed.

In addition, the download process of the data is similar to the uplink process, which will not be described here.

In this embodiment, in the U-disc activation mode, only a U-disc related module is activated; in the network card activation mode, interaction is performed via an AT command in the data card, and the data card can be used to surf a network without installing GUI software, being compatible with various operating systems; moreover, when the data card is activated in the network card activation mode, an Ethernet network card will be enumerated directly, and the switching process of the traditional data card from CDROM to Modem will not appear, thereby improving the activation speed of the data card. In addition, the Ethernet card device and the U-disc device will not function at the same time, which can ensure that the limited bandwidth of a USB is completely used for data service, thereby being able to effectively improve the network surfing speed.

As shown in Fig. 5, an embodiment of the present invention proposes a data card, comprising: a detection module 601, a network card activation module 602, a connection establishment module 603 and a U-disc activation module 604, wherein:
the detection module 601 is configured to detect an activation state of the data card after the data card is powered on;
the network card activation module 602 is configured to, when the activation state is a network card activation mode, complete a startup process of the data card via an AT command generated in the data card; and
the connection establishment module 603 is configured to establish a connection to a terminal and establishing a connection with a network via dialing up on the terminal.

The U-disc activation module 604 is configured to, when the activation state is a U-disc activation mode, activate a U-disc function module and establish a data transmission channel to the terminal.

In this embodiment, the data card has two functions, i.e., U-disc and network card, and there are two corresponding activation modes; the shell of the data card is provided with a toggle switch, and the user selects the activation mode of the data card through the toggle switch.

Before the data card is inserted into a terminal, such as a PC, via a USB interface, the user first selects the position of the toggle switch according to his/her own demand and then selects the activation mode.

After the data card is inserted into the terminal via the USB interface, the terminal supplies power to the data card. The data card starts to run activation codes, in which, the data card first checks the position state of the toggle switch which is set by the user, and the position state is represented in the form of level, wherein a high level represents to activate in the network card activation mode, and a low level represents to activate in the U-disc activation mode. The state signal of the toggle switch is connection to a GPIO pin of the data card. When being activated, the data card first reads the state value of the GPIO pin, if the state value is 0, i.e., the state value is the low level, then it is activated in the U-disc activation mode; and if the state value is 1, i.e., the state value is the high level, then it is activated in the network card activation mode.

When the data card is activated in the network card activation mode, the data card is connected to the terminal via an Ethernet interface, and a virtual network card device is generated in the device manager of the terminal. This virtual network card device satisfies Ethernet 802.3 protocol, and the IP data packets generated by all the application programs are born via Ethernet frames. As compared to the conventional PPP mode, the compression and parsing process of the data packet is removed when transmitting IP data packets with Ethernet frames, which can effectively improve the network surfing rate. At the same time, this virtual network card device satisfies USB 2.0 protocol specifications, and various operating systems can support this virtual network card device.

Taking Windows xp operating system as an example, after the data card is activated, the information about this virtual network card device can be queried in the device manager, and in an initial state, the connection state of the virtual network card shows "unconnected". The virtual network card satisfies USB ECM specification and is compatible with USB2.0 protocol, and it has very good compatibility for various operating systems.

When the data card is activated in the network card activation mode, it first invokes the network card activation module to perform self-startup without sending the AT command via GUI.

This network card activation module is integrated with an AT command generation unit and an AT command parsing execution unit, wherein the AT command generation unit generates all the AT commands that are required when the data card is powered on, such as radio frequency enable, SIM card initialization, network searching, cell residence, and so on, and sends these AT commands to the AT command parsing execution unit successively. Another advantage of integrating the AT command generation unit in the data card is that the difference among the AT command sets of various operators are shielded. Since some terminal device manufacturers such as MID (Mobile Internet Devices) device manufacturers usually integrate a plurality of groups of AT command sets in the terminal for supporting the products of a plurality of operators simultaneously, and once the operators update the AT commands, usually there will be a problem occurring in the AT command interaction of the MID terminal and the data card, resulting in that both of them cannot be compatible.

The function of the AT command generation unit is equivalent to the GUI software in the traditional data card and can complete the interaction of AT commands with the AT command parsing execution unit, so as to complete the startup process.

The AT command parsing execution unit is responsible for processing the AT commands from the AT command generation unit and converting same to particular operation commands to control the software and hardware of the data card to work cooperatively.

In particular, after receiving the AT command, the AT command parsing execution unit invokes different software and hardware modules to perform corresponding processing, for example, if it receives an AT + CFUN = 1 command, a radio-frequency switch will be switched on. After the processing of the AT command is completed, the AT command parsing execution unit returns the processing result to the "AT command generator", so as to generate a next AT command.

Therefore, the data card can complete the startup function via the network card activation module without sending an AT command via GUI.

Before surfing a network, the virtual network card device first dials up. For the operating system, the virtual network card is equivalent to a real physical network card, and dialup can be completed by way of receiving a corresponding command input by the user and creating a network connection on the operating system. Since a standard network card interface is employed, the dialup function of the data card can be completed without any additional GUI software.

After the startup process of the data card is completed, the data card can perform a dialup operation. At this moment, the data card notifies a terminal driver to modify the connection state of the virtual data card as "connected" by way of sending a network card connection state command to the terminal via the USB ECM interface. Taking a windows system as an example, at this moment, the host machine will initiate DHCP negotiation, and after the DHCP negotiation is completed, a connected virtual network card device appears in the system tray of the terminal and the local area network IP address allocated by the DHCP host machine is obtained.

After the virtual network card device is in a connected state, the data card performs a dialup operation by way of receiving a dialup command of the user. The dialup method is similar to the existing ADSL, and dialup can be performed by newly establishing a bandwidth connection. In particular, dialup is performed through PPPOE protocol, and during dialup, the data card performs PDP activation, and after the activation succeeds, the data card opens the data transmission channel and obtains the wide area network IP address allocated by the network.

After the dialup connection is completed, the data card can receive various input commands of the user and surf a network via the virtual network card.

In addition, when the data card is activated in the network card activation mode, an Ethernet card will be enumerated directly, and the switching process of the traditional data card from CDROM to Modem will not appear, thereby improving the activation speed of the data card. In addition, the Ethernet card device and the U-disc device will not function at the same time, which can ensure that the limited bandwidth of a USB is completely used for data service, thereby being able to effectively improve the network surfing speed.

When the data card is activated in the U-disc activation mode, a CDROM device and a removable disk device are generated in the device manager of the terminal. The CDROM contains the driver software provided by the manufacture; and the removable disk device is equivalent to a TF card reader for providing the function of U-disc storage.

In particular, when the data card is activated in the U-disc mode, during the initialization process thereof, only software and hardware modules related to the U-disc are enabled and operations such as network searching, cell residence, etc., will not be performed, so as to improve the activation speed, reduce power consumption and improve the transmission performance. In the U-disc activation mode, a plurality of logic devices may be enumerated, and taking CDROM and TF card reader as an example, it is required to open enable an NAND FLASH module and an SD module.

The simplification of the above-mentioned initialization process improves the activation speed of the data card; disenabling hardware modules not related to the U-disc, such as radio-frequency module, may reduce the power consumption of the whole machine effectively; and disenabling software modules not related to the U-disc may ensure that the U-disc is not interfered during data storage.

After the activation in the U-disc activation mode succeeds, the data card can receive a corresponding command input by the user to operate the CDROM and TF card reader. Since at this moment, there is no network surfing data occupying the bandwidth over the USB interface, the speed of the U-disc can reach the level of the existing U-disc.

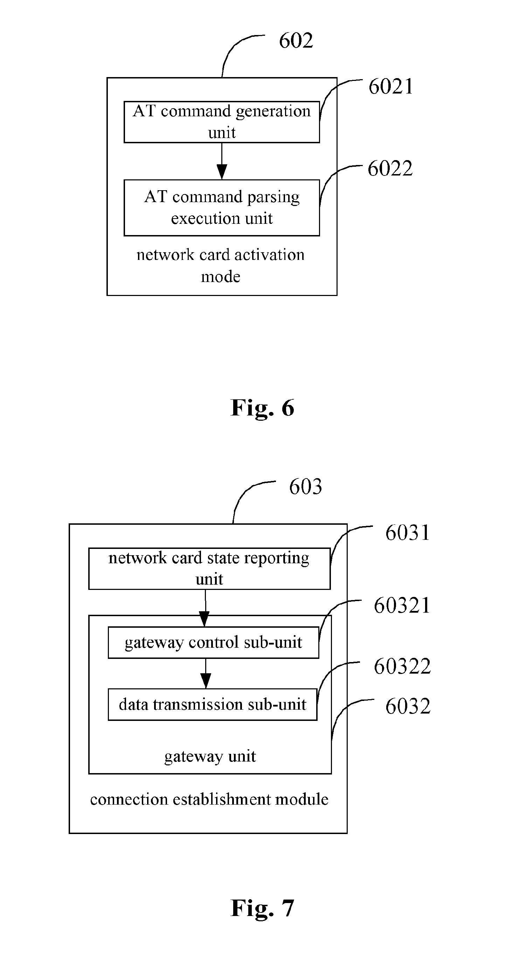

As shown in Fig. 6, the network card activation mode 602 comprises: an AT command generation unit 6021 and an AT command parsing execution unit 6022, wherein:
the AT command generation unit 6021 is configured to generate an AT command; and
the AT command parsing execution unit 6022 is configured to parse the AT command and invoke a corresponding startup function module in the data card according to the AT command.

As shown in Fig. 7, the connection establishment module 603 comprises: a network card state reporting unit 6031 and a gateway unit 6032, wherein the gateway unit 6032 comprises a gateway control sub-unit 60321 and a data transmission sub-unit 60322;
the network card state reporting unit 6031 is configured to send a network card connection state command to the terminal via an USB ECM interface; and
the gateway control sub-unit 60321 is configured to, after the terminal modifies the connection state of the data card according to the network card connection state command, allocate a local area network IP address to the terminal and establish the connection to the terminal; and to perform PDP activation via dialing up on the terminal, open an acquired data transmission channel, and obtain a wide area network IP address allocated by the network after the activation succeeds; and
the data transmission sub-unit 60322 is configured to transmit an IP data packet born by Ethernet frames between the terminal and the network via the local area network IP address and the wide area network IP address.

In this embodiment, after the data card establishes the connection to the terminal and the network, the terminal can perform data transmission with the network via the data card.

The data card and the terminal such as a PC machine employ a virtual Ethernet card connection mode. The terminal is equivalent to a client, and the data card is equivalent to a gateway device.

For simulating the gateway function, a "virtual gateway module" is integrated in the data card, and a 802.3 module, an ARP (Address Resolution Protocol) module, a DHCP module and a PPPOE module are integrated in the "virtual gateway module", wherein
the 802.3 module is configured to transceive an Ethernet frame format data packet from the USB interface and convert the Ethernet frame format data packet to an IP data packet to interact with an upper-layer module;
the ARP module is configured by a client to query a MAC address corresponding to an IP address;
the DHCP module is configured to allocate an IP address to the client, wherein the IP address is a local area network IP, for example, the gateway IP is 192.168.0.1, and the IP address of the client can be allocated with 192.168.0.2; and
the PPPOE module is configured to process the dial-up access function of the user, and during dialup, the PPPOE module will invoke the PDP module to complete the activation of the PDP data and obtain an IP address allocated by the network side, which IP address is the wide area network IP.

The data packet generated by the terminal can be sent to an external network merely after passing the gateway device, which is referred to as data uplink here; vice versa, the data of the external network can be sent to the terminal merely after passing through the gateway device, which is referred to download here.

As regards the transmission process of uplink data, please refer to the contents described in the above-mentioned embodiments, and the download process of data is similar to the uplink process, which will not be described here.

In the embodiments of the present invention, by way of setting two activation modes of a data card, i.e., network card activation mode and U-disc activation mode, in the U-disc activation mode, only a U-disc related module is activated, and in the network card activation mode, interaction is performed via an AT command in the data card, the data card can be used to surf a network without installing GUI software, and various operating systems can be compatible; moreover, when the data card is activated in the network card activation mode, an Ethernet card is enumerated directly, the switching process of the conventional data card from CDROM to Modem will not appear, thereby improving the activation speed of the data card. In addition, the Ethernet card device and the U-disc device will not appear at the same time, which can ensure that the limited bandwidth of a USB is completely used for data service, thereby being able to effectively improve the network surfing speed.

Any equivalent replacements of the structure or the flow based on the contents of the specification and drawings of the present invention, or direct or indirect application of the equivalent replacements in other related technical fields shall fall within the scope of protection of the disclosure.

## Claims

1. An activation method for a data card, **characterized by** comprising:
after being powered on, the data card detecting an activation state of the data card;
when the activation state is a network card activation mode, completing a startup process of the data card via an AT command generated in the data card; and
the data card establishing a connection to a terminal and establishing a connection with a network via dialing up on the terminal.

2. The method according to claim 1, **characterized in that** the method further comprises:
when the activation state is a U-disc activation mode, the data card activating a U-disc function module and establishing a data transmission channel to the terminal.

3. The method according to claim 1, **characterized in that** completing the startup process of the data card via the AT command is embodied as:
the data card generating the AT command; and
the data card parsing the AT command and invoking a corresponding startup function module on the data card according to the AT command.

4. The method according to claim 1, **characterized in that** establishing the connection with the terminal is embodied as:
sending to the terminal a network card connection state command via an universal serial bus (USB) Ethernet control model (ECM) interface; and
after the terminal modifies a connection state of the data card according to the network card connection state command, the data card allocating a local area network IP address to the terminal and establishing the connection to the terminal.

5. The method according to claim 4, **characterized in that** establishing the connection to the network via dialing up on the terminal is embodied as:
the data card performing packet data protocol (PDP) activation via dialing up on the terminal;
after the activation succeeds, opening an acquired data transmission channel and obtaining a wide area network IP address allocated by the network; and
transmitting an IP data packet born by Ethernet frames between the terminal and the network via the local area network IP address and the wide area network IP address.

6. A data card, **characterized by** comprising:
a detection module, configured to detect an activation state of the data card after the data card is powered on;
a network card activation module, configured to complete a startup process of the data card via an AT command generated in the data card when the activation state is a network card activation mode,; and
a connection establishment module, configured to establish a connection to a terminal and establish a connection with a network via dialing up on the terminal.

7. The method according to claim 6, **characterized in that** the data card further comprises:
a U-disc activation module, configured to, when the activation state is a U-disc activation mode, activate a U-disc function module and establish a data transmission channel to the terminal.

8. The data card according to claim 7, **characterized in that** the network card activation module further comprises:
an AT command generation unit, configured to generate an AT command; and
an AT command parsing execution unit, configured to parse the AT command and invoke a corresponding startup function module on the data card according to the AT command.

9. The data card according to claim 6, **characterized in that** the connection establishment module comprises a network card state reporting unit and a gateway unit, wherein
the network card state reporting unit is configured to send a network card connection state command to the terminal via an universal serial bus(USB) Ethernet control model( ECM) interface; and
the gateway unit comprises a gateway control sub-unit, which is configured to, after the terminal modifies a connection state of the data card according to the network card connection state command, allocate a local area network IP address to the terminal and establish the connection to the terminal.

10. The data card according to claim 9, **characterized in that** the gateway unit also comprises a data transmission sub-unit, wherein
the gateway control sub-unit is further configured to perform packet data protocol (PDP) activation via dialing up on the terminal, open an acquired data transmission channel, and obtain a wide area network IP address allocated by the network after the activation succeeds; and
the data transmission sub-unit is configured to transmit an IP data packet born by Ethernet frames between the terminal and the network via the local area network IP address and the wide area network IP address.
